# EUROPÄISCHE PATENTANMELDUNG

(11) **EP 1 659 674 A1**
(43) Veröffentlichungstag der Anmeldung: **24.05.2006**
(21) Anmeldenummer: 04105902.3
(22) Anmeldetag: 18.11.2004
(51) Int. Cl.: H02K 17/12, H02K 21/14

(54) **Elektrische Maschine**

(71) Anmelder: Seiwerath, Constant, 3249 Bettembourg (LU)
(72) Erfinder: Seiwerath, Constant, 3249 Bettembourg (LU)
(74) Vertreter: Dennemeyer, John James

(57) **Zusammenfassung**

Elektrische Maschine zum Motor- und/oder Generatorbetrieb, bei der die Anzahl der Magnetpolpaare (13) um mindestens eine Einheit grösser oder kleiner ist als die Anzahl der Wicklungspolpaare (16). Dabei werden die Wicklungen (16) getrennt einer Verwertung (z.B. je einem Gleichrichter (171-174) bei Generatoren) oder einer getrennten Ansteuerung (bei Motoren) zugeführt. Die Erfindung ist besonders gut geeignet zur Verwendung als Generatoren bei Windkraftanlagen.

## Beschreibung

### Gebiet der Technik

Die vorliegende Erfindung betrifft elektrische Maschinen in Form von Asynchron- oder Synchronmaschinen zur Verwendung als elektrische Motoren und Generatoren.

### Bekannter Stand der Technik.

Zurzeit bekannt sind Synchronpermanentmagnetgeneratoren zur elektrischen Stromproduktion, sowie Permanentmagnetmotoren. Ebenso sind Synchron- und Asynchronmotoren ohne Permanentmagnete bekannt.

Bei Windkraftanlagen kommen üblicherweise die im folgenden beschriebenen elektrischen Maschinen zur Anwendung. Hauptsächlich bei kleineren Windkraftanlagen werden als Batterielader dreiphasige (Drehstrom-) asynchrone Käfigläufermotoren mit und ohne Getriebe verwendet, welche über Kondensatoren erregt werden, oder auch Permanentmagnetmotoren mit und ohne Getriebe.

Sowie bei kleineren Windkraftanlagen zur Netzeinspeisung werden häufig dreiphasige Käfigläufergetriebemotoren eingesetzt, welche mittels Vierquadranten-Wechselrichter elektrischen Strom rückspeisen können.

Hauptsächlich bei grossen Windkraftanlagen kommen dreiphasige Käfigläufermotoren zur Anwendung, die immer mit Getriebe ausgeführt sind, und meistens polumschaltbar sind.

Ebenso ist die Verwendung von dreiphasigen doppelgespeisten Asynchrongeneratoren bekannt, welche mittels eines Wechselrichters am Rotor eine Frequenz einspeisen und so variable Umdrehungszahlen nutzen. Diese Bauform von Asynchrongeneratoren ist immer auf ein Getriebe angewiesen.

Darüber hinaus sind auch getriebelose vielpolige Synchrongeneratoren bekannt, die mit elektrischen Erregerspulen für eine variable Umdrehungszahl angepasst sind.

### Nachteile des Standes der Technik

Die technisch-logische Betriebsblindheit, mit der sich die Fachwelt umgibt, liegt darin, dass Motoren und Generatoren eingefahrenen Lerntheorien unterliegen, d.h. sogenannte Axiome darstellen mit anerkannten Gesetzmäßigkeiten. Sie gehören im technischen Leben zu den Grundtatsachen über die der Fachmann nicht mehr nachdenkt.

So ist es anerkannter Stand der Technik, dass immer alle Wicklungen zusammengeklemmt werden und diese Kabel einem Verbraucher zugeführt werden.

Die bekannten elektrischen Maschinen weisen ein hohes Losbrechmoment auf, wodurch das Anlaufen dieser Maschinen erschwert ist.

Darüber hinaus weisen herkömmliche elektrische Maschinen ein zeitlich ungleichmäßiges Drehmoment auf. Außerdem ist die Gestaltung des Magnetflusses nicht optimal, weil die Wicklungen beim Polübergang teilweise gegeneinander wirken.

Elektrische Maschinen nach dem Stand der Technik sind kompliziert und stellen einen bedeutenden wirtschaftlichen Nachteil für herkömmliche Windkraftanlagen dar.

Aufgabe der Erfindung ist es, eine elektrische Maschine vorzuschlagen, welche die oben genannten Nachteile überwindet.

### Beschreibung der Erfindung:

Die vorliegende Erfindung beruht auf einer Überwindung dieser Beschränkungen der anerkannte Gesetzmässigkeiten.

Erfindungsgemäß wird die technische Aufgabe durch eine elektrische Maschine gemäß Anspruch 1 gelöst.

Zur Lösung der der Erfindung zugrunde liegenden Aufgabe wird eine elektrische Maschine zum Motor- und/oder Generatorbetrieb vorgeschlagen, mit einem Rotor und einem Stator, wobei der Rotor bzw. Stator mit aus Permanent oder Elektromagneten bestehenden Polpaaren ausgeführt ist, und der Stator bzw. Rotor mit aus Wicklungen bestehenden Polpaaren ausgeführt ist, wobei die Anzahl der Magnetpolpaare und die Anzahl der Wicklungspolpaare unterschiedlich sind.

Des weiteren kann die elektrische Maschine als Asynchronmaschine oder Synchronmaschine ausgeführt sein.

Vorteilhafterweise ist die Anzahl der Magnetpolpaare um mindestens eins kleiner oder größer als die Anzahl der Wicklungspolpaare.

Darüber hinaus können die Wicklungen elektrisch voneinander getrennt sein.

Jede Wicklung kann mit einem einzelnen Gleichrichter verbunden sein , oder einer getrennten Nutzung zugeführt werden.

In einer anderen Ausführungsform kann jede Wicklung mit einer einzelnen Schaltvorrichtung verbunden ist.

Bevorzugterweise sind die geometrischen Winkelgrade zwischen den Magnetpolpaaren einerseits und die geometrischen Winkelgrade zwischen den Wicklungspolpaaren andererseits unterschiedlich gross.

### Allgemeines

Normalerweise gestaltet man bei Motoren und Generatoren die Wicklungen als feststehendes Teil (Stator) und die Magnete als drehendes Teil (Rotor). Nach dem Sinn der Anmeldung kann sowohl das drehende Innen- als auch das drehende Aussenteil der Rotor sein, unabhängig davon, ob es sich um die Magnete oder um die Wicklungen handelt.

Die Erfindung kann sowohl bei Generatoren als auch bei Motoren Anwendung finden.

Ob die Wicklungen bzw. Magnetpole als mono-, zwei-, drei-, vier-, oder als mehrphasige Wicklungen zur Anwendung gelangen, ist für die Erfindung unwichtig.

Das Prinzip ist anwendbar bei den bekannten axialen Maschinen als auch bei den Scheibenläufern (Discoide-Generatoren und Motoren).

Dabei werden die Wicklungen getrennt einer Verwertung (durch z.B. je einen Gleichrichter pro Wicklung bei Generatoren) oder einer getrennten Ansteuerung pro Wicklung (bei Motoren) zugeführt.

### Vorteile der Erfindung.

Ein Vorteil dieser Erfindung liegt in dem kaum vorhandenen, bzw. wesentlich geringeren Losbrechmoment. Wegen des (fast) fehlenden Losbrechmoments kann bei Windkraftanlagen auf eine Anfahrstellung bei der Flügelregelung oder auf ein Andrehen im Motorbetrieb verzichtet werden.

Des weiteren kann darauf verzichtet werden, die Magnete oder die Wicklungen schräg oder V-förmig zur Rotationsachse anzuordnen. Bei einer Asynchronmaschine wird pro Umdrehung die maximale Drehmomentspitze durch die Anzahl der Wicklungspolpaare geteilt, wobei die ruckende Belastung an den Segmentblechen und an den Tragarmen wesentlich verringert wird. Es wird ein gleichmäßigeres Drehmoment erzeugt.

Außerdem steigt bei der erfindungsgemäßen Synchron- und Asynchronmaschine der elektrische Wirkungsgrad an, weil jeder einzelne Wicklungspol eine optimale Magnetisierung erreicht.

Darüber hinaus wird bei der erfindungsgemäßen Ausführung als Asynchronmaschine durch das konstantere Drehmoment der Lärmpegel reduziert.

Bei dem erfindungsgemäßen Asynchrongenerator wird ein im wesentlichen geglätteter Gleichstrom produziert, was einen weiteren Vorteil darstellt.
Durch die große Anzahl von Gleichrichtern kleinerer Leistung resultiert ein günstigerer Gleichrichterpreis als bei einem einzelnen Gleichrichter, der auf die Gesamtleistung des Generators ausgelegt ist, weil trotz der benötigten höheren Anzahl von Gleichrichtern diese aus der Großserienherstellung stammen.

Ein besonderer Vorteil der vorliegenden Erfindung ist, dass durch die grosse Anzahl von Gleichrichter sich die Leistungskurve des Generators (quadratisch) sehr einfach und ohne wesentliche Zusatzkosten an die Leistungskurve der Windkraftanlage (kubisch) anpassen lässt. Hierzu wählt man einen Teil der Gleichrichter so aus, dass diese bei geringeren Leistungen der Windkraftanlage noch keinen Strom des Generators durchlassen. Mit steigender Leistung lassen immer mehr der Gleichrichter elektrischen Strom durch, wobei die Generatorleistung dann optimal der kubischen Leistungsabgabe der Windkraftanlage folgt.

Die Erfindung ist besonders gut geeignet zum Einsatz als Generatoren bei Windkraftanlagen.

Das Prinzip dieser Erfindung ist darüber hinaus besonders gut geeignet bei langsam drehenden, vielpoligen Permanentmagnet-Generatoren und Motoren z.B. bei Windkraftanlagen, bei Unterseebooten und bei Schiffsgeneratoren.

### Beschreibung der technischen Zeichnungen

- Fig. 1: zeigt eine erfindungsgemäße Asynchronpermanentmagnetmaschine als Generator.
- Fig. 2: zeigt eine erfindungsgemäße Asynchronpermanentmagnetmaschine als Generator.
- Fig. 3A: zeigt die elektrische Ansteuerung bei Motoren mit getrennt ansteuerbaren Wicklungen.
- Fig. 3B: zeigt die zeitliche Abfolge der Ansteuersignale der getrennt ansteuerbaren Wicklungen.
- Fig. 3C: zeigt den zeitlichen Drehmomentverlauf.

### Detaillierte Beschreibung der Erfindung

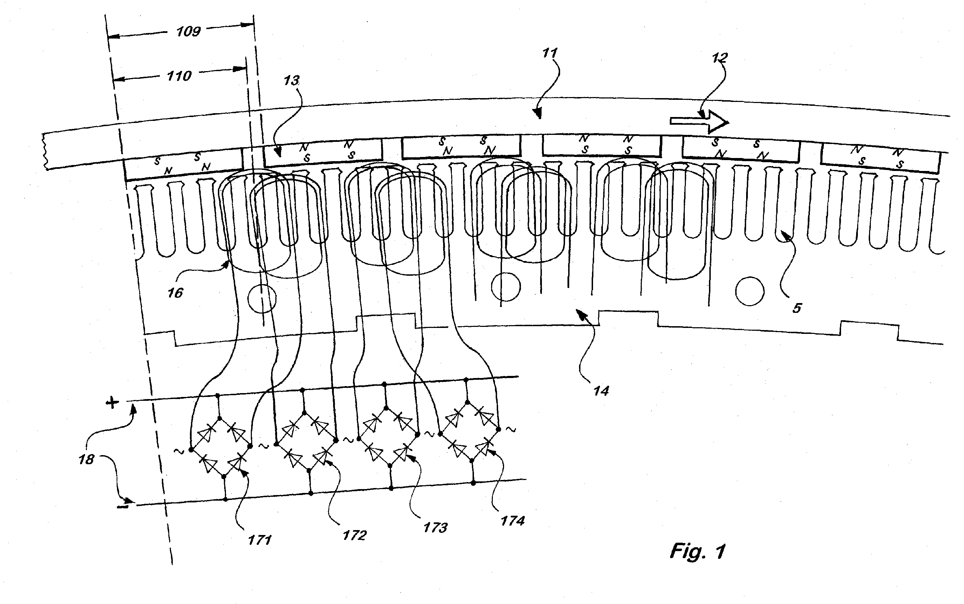

Gemäß einer ersten bevorzugten Ausführungsform der Erfindung ist in Fig. 1 ein Teilstück eines Asynchrongenerators mit feststehendem innenliegendem Stator 14 und in Bewegungsrichtung 12 drehendem äusserem Rotor 11 dargestellt. Der Rotor 11 weist weniger Magnetpolpaare 13 auf als Wicklungspolpaare 16 auf dem Stator 14 ausgebildet sind.

Die Wicklungen der Polpaare 16 sind in die Nuten 15 der Segmentbleche des Stators 14 eingelegt. Als Wicklungsart wurde in der in Fig. 1 gezeigten Ausführungsform vierphasige Magnetpolpaare gewählt, deren gegenüberliegende, getrennte monophasige Wicklungen 16, jeweils einzeln an einem monophasigen Brückengleichrichter 171, 172, 173, 174 geklemmt ist, und zur weiteren Nutzung am Ausgang 18 einem Verbraucher im weiteren Sinne, wie z.B. einem Wechselrichter oder einer aufladbaren Batterie zur Verfügung gestellt wird.

Die Wicklungen der Polpaare 16 werden bevorzugterweise in Kupfer- oder in Aluminiumdraht gefertigt.

Gut sichtbar ist in Fig. 1 der Unterschied der Winkelgrade 109 zwischen den Magnetpolen und der Winkelgrade 110 zwischen den Wicklungspolen.

Dieser Generator ist vorzugsweise für Tourenzahlen von 15 Hz bis idealerweise 30 Hz geeignet. Der Durchmesser des Luftspalts einer bevorzugten Ausführung beträgt 6600 mm, wobei der Rotor mit 186 Permanentmagneten belegt ist und die Windungszahl pro Wicklung des Stators 520 beträgt. Nach dem Anlaufen wird die Nenndrehzahl in einem Bereich von 6 bis 28 U/min erreicht, wobei die Nenndrehzahl auf 24 - 28 U/min begrenzt wird.

Die in Fig. 1 gezeichnete Wicklungsart bietet den zusätzlichen Vorteil, dass die stirnseitigen Bögen der Wicklungen kürzer sind als bei den üblichen Dreiphasenwicklungen. Dies bringt eine Einsparung von Kupfer- bzw. Aluminiumdraht, sowie außerdem eine Wirkungsgraderhöhung und eine geringere Erwärmung des Generators.

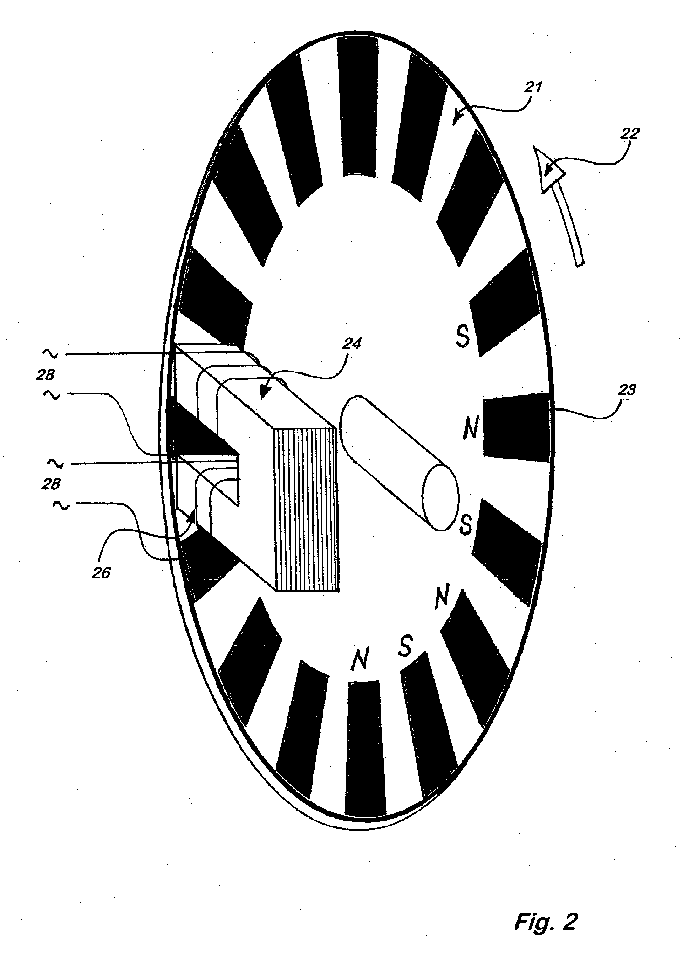

In Fig. 2 wurde gemäß einer weiteren bevorzugten Ausführungsform der Erfindung ein Generator dargestellt, der wesentlich mehr Magnetpolpaaren als Wicklungspolpaaren aufweist, und besonders für kleinere Windkraftanlagen geeignet ist.

Der Durchmesser diese Generators beträgt ca. 800 mm und ist in der hier gezeigten bevorzugten Ausführungsform mit 12 Polpaaren und 3 bis 4 Wicklungspaaren mit jeweils 50 bis 150 Windungen ausgeführt. Dadurch wird eine Leistung von ca. 0,3 bis 6 kW bei einer Umdrehungszahl von 30 bis 200 U/min erreicht.

Der Rotor 21 ist in Bewegungsrichtung 22 drehend und ist mit Permanentmagneten 23 ausgestattet. Der Stator besteht aus einem oder mehreren Blechpaketen 24 mit den Wicklungspolpaaren 26, deren Kabelenden über einen Gleichrichter 27 einer Verwertung 28 zugeführt werden.

In Fig. 2 ist symbolisch nur ein Wicklungspolpaar 26 eingezeichnet. Werden bei einer realen Ausführung mehrere Wicklungspolpaare 26 eingebaut, so sind diese vorzugsweise in nicht gleichmässigen Winkelgraden anzuordnen.

Ein Vorteil einer besonders vorteilhaften Ausführungsform der vorliegenden Erfindung ist, dass durch die große Anzahl von Gleichrichter sich die Leistungskurve des Generators (quadratisch) sehr einfach und ohne wesentliche Zusatzkosten an die Leistungskurve der Windkraftanlage (kubisch) anpassen lässt. Hierzu wählt man einen Teil der Gleichrichter (in Fig. 1: Gleichrichter 171 bis 174) so aus, dass diese bei geringeren Leistungen der Windkraftanlage noch keinen Strom des Generators durchlassen. Mit steigender Leistung lassen immer mehr der Gleichrichter 171 bis 174 elektrischen Strom durch, wobei die Generatorleistung dann optimal der kubischen Leistungsabgabe der Windkraftanlage folgt.

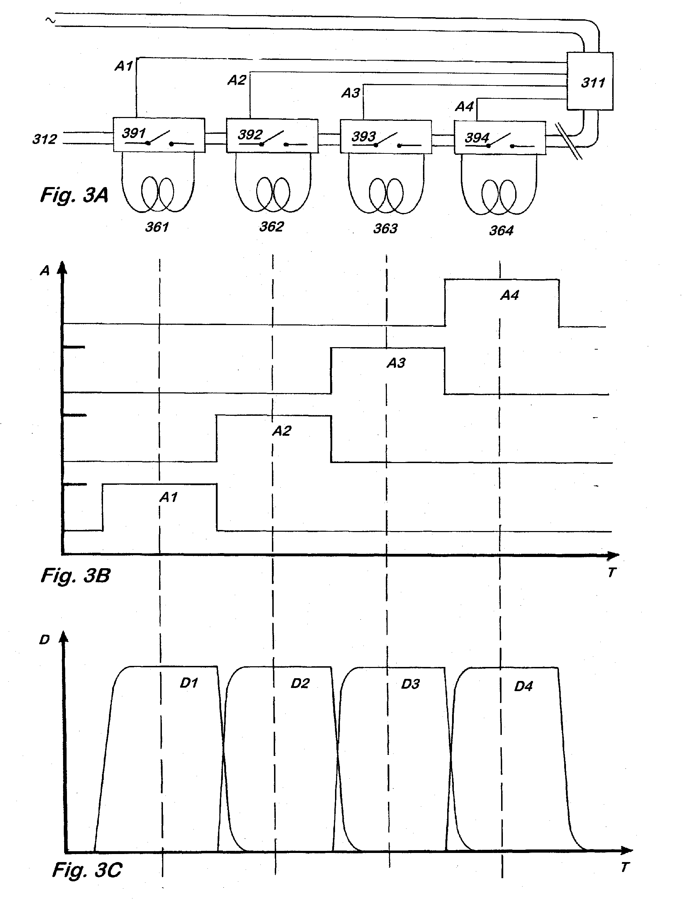

Gemäß einer weiteren bevorzugten Ausführungsform der Erfindung zeigt Fig. 3 die elektrische Ansteuerung einer erfindungsgemäßen elektrischen Maschine, wenn die Maschine als Motor zum Einsatz kommt.

Dieser Motor ist besonders geeignet für niedrige Drehzahlen, wie sie z.B. in Testständen, Unterseebooten, Blockwalzstraßen, usw. gefordert werden.

Der Einfachheit halber wird hier nur das Beispiel einer elektrischen Maschine mit vier getrennt angesteuerten Wicklungen erläutert, aber das Grundprinzip der Erfindung lässt sich auf elektrische Maschinen mit beliebiger Wicklungszahl erweitern.

Im Schaltbild, das in Fig. 3A gezeigt ist, wird auf Grund der Signale der Steuerungsvorrichtung 11 der Stromfluss an den elektronischen Leistungsschaltern 391 bis 394 gesteuert und eine Magnetisierung der einzelnen Wicklungspole 361 bis 364 erreicht.

Die Schaltmittel sind vorzugsweise als elektronische Leistungsschalter ausgelegt, wie z.B. Thyristor, TRIAC, GTO, Leistungs-MOSFET usw.

In Fig. 3B ist die Ansteuerung grafisch (A1 bis A4) aufgezeichnet, wobei A die Eingangsspannung über den Zeitverlauf T darstellt.

Zunächst wird mit dem Steuersignal A1 die erste Wicklung 361 für ein Viertel der Periodenzeit angesteuert, daraufhin mit A2 die zweite Wicklung 362, anschließend mit A3 die dritte Wicklung 363, und schließlich mit A4 die vierte Wicklung 364. Daraufhin beginnt erneut die Ansteuerung der ersten Wicklung 361 durch das Steuersignal A1, wenn ihre Position mit dem nachfolgenden Magnet übereinstimmt.

In Fig. 3C sind die einzelnen Drehmomentkurven D1 bis D4 dargestellt, wobei D die Höhe des Drehmomentes und T wiederum der Zeitverlauf ist.

Durch die zeitversetzte Ansteuerung der einzelnen Wicklungen 361, 362, 363, 364 steht ein zeitlich beinahe konstantes Drehmoment D zur Verfügung.

Wegen der Zeitverzögerung der Magnetisierung an den Wicklungspolen entstehen Drehmomentkurven D1 bis D4, deren Flanken von der Vertikalen abweichen und einen leicht gerundete Verlauf am oberen und unteren Leistungspunkt besitzen.

## Patentansprüche

1. Elektrische Maschine zum Motor- und/oder Generatorbetrieb mit einem Rotor (11; 21) und einem Stator (14; 24), wobei der Rotor (11; 21) bzw. Stator mit aus Permanentmagneten (13; 23) oder Elektromagneten bestehenden Polpaaren ausgeführt ist, und der Stator (14; 24) bzw. Rotor mit aus Wicklungen (16; 26) bestehenden Polpaaren ausgeführt ist, wobei die Anzahl der Magnetpolpaare (13; 23) und die Anzahl der Wicklungspolpaare (16; 26) unterschiedlich sind.

2. Elektrische Maschine nach Anspruch 1, wobei die elektrische Maschine als Asynchronmaschine ausgeführt ist.

3. Elektrische Maschine nach Anspruch 1, wobei die elektrische Maschine als Synchronmaschine ausgeführt ist.

4. Elektrische Maschine nach einem der vorangehenden Ansprüche, wobei die Anzahl der Magnetpolpaare (13) um mindestens eins kleiner ist als die Anzahl der Wicklungspolpaare (16).

5. Elektrische Maschine nach einem der Ansprüche 1 bis 3, wobei die Anzahl der Magnetpolpaare (23) um mindestens eins größer ist als die Anzahl der Wicklungspolpaare (26).

6. Elektrische Maschine nach einem der vorangehenden Ansprüche, wobei die Wicklungen (16; 26; 361, 362, 363, 364) elektrisch voneinander getrennt sind.

7. Elektrische Maschine nach Anspruch 6, wobei jede Wicklung (16, 26) mit einem einzelnen Gleichrichter (171, 172, 173, 174; 27) verbunden ist,

8. Elektrische Maschine nach Anspruch 6, wobei jede Wicklung (16, 26) einer getrennten Nutzung zugeführt werden.

9. Elektrische Maschine nach Anspruch 6, wobei jede Wicklung (361, 362, 363, 364) mit einer einzelnen Schaltvorrichtung (391, 392, 393, 394) verbunden ist.

10. Elektrische Maschine nach einem der vorangegangen Ansprüche, wobei die geometrischen Winkelgrade (110) zwischen den Magnetpolpaaren (13, 23) einerseits und die geometrischen Winkelgrade (109) zwischen den Wicklungspolpaaren (16, 26) andererseits unterschiedlich gross sind.
